# EUROPÄISCHE PATENTSCHRIFT

(11) **EP 1 333 626 B1**
(45) Veröffentlichungstag und Bekanntmachung des Hinweises auf die Patenterteilung: **10.08.2005**
(21) Anmeldenummer: 02002559.9
(22) Anmeldetag: 04.02.2002
(51) Int. Cl.: H04L 12/56

(54) **Verfahren zur Aufrechterhaltung einer Paketdatenverbindung in einem Funk-Kommunikationssystem**
Method for maintaining a packet data connection in a radio communications system
Procédé de maintien d'une connection par paquet de données dans un réseau de communication radio

(43) Veröffentlichungstag der Anmeldung: 06.08.2003
(73) Patentinhaber: SIEMENS AKTIENGESELLSCHAFT, 80333 München (DE)
(72) Erfinder: Höynck, Andreas, 16540 Hohen Neuendorf (DE); Lehmann, Gerald, 12101 Berlin (DE); Sommer, Volker, Dr., 13503 Berlin (DE)

(56) Entgegenhaltungen:
- EP-A- 1 148 749

## Beschreibung

Die Erfindung bezieht sich auf ein Verfahren zur Aufrechterhaltung paketorientierter Datenverbindungen in einem Funk-Kommunikationssystem mit den oberbegrifflichen Merkmalen des Patentanspruchs 1 bzw. ein Funk-Kommunikationssystem zum Durchführen eines solchen Verfahrens.

Moderne Mobilfunksysteme, wie z.B. das UMTS (Universal Mobile Telecommunications System), werden zunehmend auf die Übertragung von Paketdaten ausgelegt. Ein wesentlicher Unterschied zu klassischen Sprachdiensten mit fester Leitungsvermittlung zwischen zwei kommunizierenden Teilnehmern besteht darin, dass die benötigten Übertragungsressourcen vielen Teilnehmern quasi gleichzeitig zur Verfügung stehen und Daten nur bei Bedarf übertragen werden. Ein besonderes Problem entsteht hierbei, falls der Datenverkehr sehr asymmetrisch erfolgen soll, z. B. vor allem in Abwärtsrichtung von einer netzseitigen Basisstation zu einer teilnehmerseitigen Teilnehmerstation, da dann zur Aufrechterhaltung der Verbindung mit möglichst guten Übertragungseigenschaften bei gleichzeitig minimaler Sendeenergie in der Regel eine geschlossene Regelschleife etabliert werden muss. Dazu ist es erforderlich, einen Kanal in Aufwärtsrichtung von den Teilnehmerstationen zu der zugeordneten netzseitigen Basisstation einzurichten, und zwar auch dann, wenn keine Daten vom Endteilnehmer zur Basisstation übertragen werden sollen.

Dieses Problem manifestiert sich vor allem beim TDD-Modus (TDD: Time Division Duplex) von UMTS. Bei TDD-Übertragungsverfahren ist ein Datenübertragungsrahmen in Zeitschlitze aufgeteilt, die den einzelnen Teilnehmerstationen zugewiesen werden, und außerdem sind in einem Frequenzband Auf- und Abwärtsrichtung für die Übertragung lediglich zeitlich getrennt. Es kann also in dem Frequenzband nur entweder empfangen oder gesendet werden. Bei TDD gibt es im Gegensatz zum FDD-Modus (FDD: Frequency Division Duplex) eine relativ grobe Granularität der verfügbaren Übertragungsressourcen Zeitschlitz und Code. Zur Codierung ist das CDMA (Code Division Multiple Access) als Teilnehmer-Separierungsverfahren allgemein bekannt. Bei CDMA ist eine Sendeleistungseinstellung notwendig, um die Interferenz gering zu halten und Fadingeffekte bei der Empfangsleistung auszuregeln. Eine schnelle und genaue Sendeleistungseinstellung ist wünschenswert, setzt aber voraus, dass permanent sowohl gesendet als auch empfangen wird.

Für Teilnehmerstationen, die bei einer netzseitigen Basisstation angemeldet sind, ist die Allokierung bzw. Zuweisung dieser Übertragungsressourcen Zeitschlitz und Code trotz zeitweiliger Inaktivität zur Aufrechterhaltung einer Verbindung erforderlich, wodurch unnötig knappe Ressourcen gebunden werden und damit die Zellkapazität verringert wird.

Der derzeitige UTRA-TDD-Standard (UTRA: Universal Terrestrial Radio Access) ermöglicht es, für Paketdaten Übertragungsressourcen zeitlich begrenzt für Aufwärts- (Uplink) bzw. Abwärtsrichtung (Downlink) getrennt zu allokieren. Falls der Kanal hinreichend gute Übertragungseigenschaften aufweist, ist es ebenfalls bereits möglich, sogenannte "Fractional Channels", also geteilte Kanäle zuzuweisen. Hierbei teilen sich mehrere Teilnehmer in Aufwärtsrichtung denselben Code in einem Zeitschlitz, wobei jeder Nutzer nur jeden n-ten Rahmen (n = 1 bis 64) auf die entsprechende Ressource zugreift. Die Zuweisung dieser "Fractional Channels" ist allerdings nur statisch über eine Signalisierung in höheren Systemebenen bzw. Layern möglich, und muss stets so erfolgen, dass der jedem Nutzer zugeordnete Teil dieses Rückkanals den individuellen Anforderungen unter Berücksichtigung von zeitlich möglicherweise stark schwankenden Kanalqualitäten genügt.

Aus der EP-A-1 148 749 ist ein Verfahren bekannt, bei dem eine Mobilstation in einem ihr von einer Basisstation zugewiesenen Kanal in regelmäßigen zeitlichen Abständen ein Paket zu der Basisstation schickt, das einem Abbau einer paketorientierten Verbindung vorbeugt. Der zeitliche Abstand ist dabei derart bemessen, dass er kleiner als ein netzseitiges Intervall zum Abbau von Verbindungen ist.

Die Aufgabe der Erfindung besteht darin, ein Verfahren zur Rückkanalallokierung zur Aufrechterhaltung paketorientierter Datenverbindungen in einem Kommunikationssystem bzw. ein Kommunikationssystem zum Durchführen eines solchen Verfahrens zu verbessern, sodass weniger Ressourcen belegt werden.

Diese Aufgabe wird durch das Verfahren zur Aufrechterhaltung paketorientierter Datenverbindungen in einem Funk-Kommunikationssystem mit den Merkmalen des Patentanspruchs 1 und durch das Funk-Kommunikationssystem mit den Merkmalen des Patentanspruchs 11 gelöst. Vorteilhafte Ausgestaltungen sind Gegenstand von abhängigen Patentansprüchen.

Bei einem Verfahren zur Aufrechterhaltung paketorientierter, insbesondere unsymmetrischer Datenverbindungen in einem Funk-Kommunikationssystem, bei dem eine netzseitige Basisstation mit einer einzelnen oder einer Vielzahl teilnehmerseitiger Stationen über eine Funk-Schnittstelle kommuniziert und zur Aufrechterhaltung der Datenverbindungen von der bzw. den Teilnehmerstationen über eine Ressource zur Basisstation gesendet wird, wobei die Basisstation die von der jeweiligen Teilnehmerstation belegte Ressource jeweils dieser Teilnehmerstation zuordnet, ist es vorteilhaft, dass jede der Teilnehmerstationen die Ressource nach eigenem Bedarf dynamisch belegt, weil dadurch im Gegensatz zur statischen Belegung von Ressourcen die Ressourcen auf der Funk-Schnittstelle eingespart werden können. Basisstation kann dabei neben z.B. einer zentralen Station eines eigenständigen Kommunikationssystems insbesondere eine vernetzte Station eines komplexen Kommunikationssystems sein, insbesondere eines Mobilfunk- oder Daten-Kommunikationssystems.

Da die Belegung der Ressource durch die jeweilige Teilnehmerstation abhängig von den individuellen Kanalbedingungen von von der Basisstation empfangenen Signalen durchgeführt wird, muss die Teilnehmerstation nur so oft ein Signal senden, wie mindestens erforderlich ist, um bei der Basisstation eingebucht zu bleiben. Dadurch ergibt sich in den Teilnehmerstationen insbesondere eine Energieeinsparung, sodass die Bereitschaftszeit erhöht wird.

Da die einzelnen Teilnehmerstationen die Ressource je häufiger belegen, je schlechter die individuellen Kanalbedingungen für die jeweiligen Stationen sind, ermöglicht eine indirekte Signalisierung der Stationen zur Basisstation, um dieser indirekt zur Anpassung an die tatsächlichen Bedingungen die Kanalqualität mitzuteilen.

Dass die Basisstation den jeweiligen Teilnehmerstationen jeweils eine oder mehrere bestimmte Ressourcen vorgibt, gibt den Teilnehmerstationen einerseits eindeutige Anweisungen, wann sie auf die Ressourcen zugreifen dürfen und auf welche Ressourcen, und lässt andererseits den Teilnehmerstationen trotzdem die Freiheit, nur bei Bedarf zuzugreifen. Die Vorgabe der bestimmten Ressource bzw. Ressourcen muss nicht mehr wie beim Stand der Technik fortwährend während der aktiven Verbindung erfolgen.

Dass als Ressource ein datenfreier Ressourcenanteil, insbesondere eine oder mehrere Mittambeln verwendet wird, bietet eine besonders einfach handhabbare Umsetzung des Verfahrens. Insbesondere ist das Verfahren auch in einem gemischten System einsetzbar, in dem die Basisstation mit herkömmlichen, durchgehend auf die Ressource zugreifenden Teilnehmerstationen und neuen Teilnehmerstationen mit eigenständiger Verwaltung des Ressourcenzugriffs parallel kommunizieren kann.

Besonders einfach können Zeitschlitze verwendet werden, in denen eine unbelegte Mittambel zur Verfügung steht, obwohl für die jeweilige Teilnehmerstation keine Codes für Datenübertragungen mehr zur Verfügung stehen.

Dass von einer zeitlichen Abfolge von Ressourcenanteilen jeder der Teilnehmerstationen in Art einer Basiszuteilung jeweils zumindest ein Ressourcenanteil zugeordnet wird, bietet eine einfach handhabbare Anweisung bei z.B. 16 verfügbaren Mittambeln als Ressourcen in 16 aufeinanderfolgenden Zeitschlitzen oder Rahmen 16 Teilnehmerstationen zu verwalten.

Dass einer Teilmenge der Teilnehmerstationen jeweils zumindest zwei Ressourcenanteile zugeordnet werden, wobei diese Ressourcenanteile aus einer Mittambel bestehen und/oder eine andere Codierung aufweisen, als der zumindest eine Ressourcenanteil, ermöglicht neben einer solchen Basiszuteilung für Teilnehmerstationen mit besonders kritischen Kanalbedingungen die Zuordnung weiterer Ressourcen für Aufwärtssignalisierungen, auf welche die Teilnehmerstationen nach Bedarf zugreifen können. Unter einer Codierung ist dabei auch die verschiedenartige Struktur von z.B. 16 typischen Mittambeln zu verstehen, die parallel in einem Zeitschlitz liegen können.

Dass zumindest einer der Teilnehmerstationen zumindest ein weiterer Ressourcenanteil in der zeitlichen Abfolge zugeordnet wird, der zeitlich gegenüber dem bzw. den anderen von zugeordneten Ressourcenanteilen versetzt ist, erhöht ebenfalls die Zugriffsmöglichkeiten für einzelne Teilnehmerstationen.

Dass der eine Ressourcenanteil aus einer anderen Mittambel besteht und/oder eine andere Codierung aufweist, als der zumindest eine weitere Ressourcenanteil, ermöglicht z.B. die Verwendung von zwei oder mehr Mittambeln.

Dass die Teilnehmerstation zur Aufrechterhaltung der Datenverbindung zumindest in zeitlichen Mindestabständen auf die zugewiesene Ressource zugreift und eine Information oder ein Signal zur Basisstation sendet, verhindert den von der Basisstation ansonsten einzuleitenden Verbindungsabbau. Der zeitliche Mindestabstand entspricht somit einer Dauer, die kürzer ist als die Zeit, nach der die Basisstation entsprechend ihren Systemvorgaben den Verbindungsabbau einleiten würde, wenn sich die Teilnehmerstation nicht zuvor gemeldet hat.

Ein Ausführungsbeispiel wird nachfolgend anhand der Zeichnung näher erläutert. Es zeigen:
- FIG 1: ein Schema zur Zuteilung von Ressourcen zu verschiedenen Teilnehmern;
- FIG 2: schematisch eine für sich bekannte Anordnung miteinander kommunizierender Teilnehmerstationen und
- FIG 3: schematisch eine für sich bekannte Unterteilung der Übertragungsressource einer Luftschnittstelle.

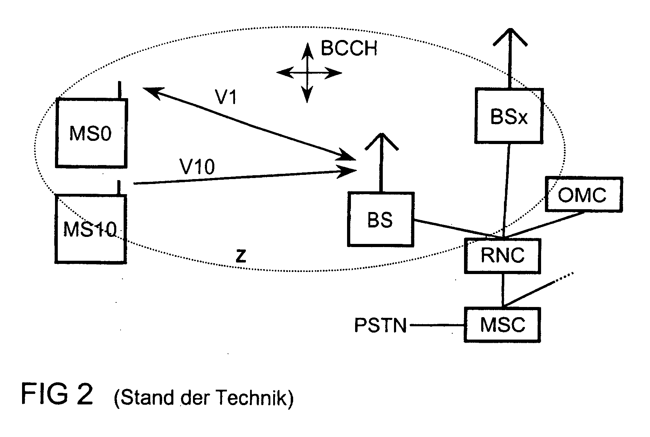

Das in FIG 2 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu z.B. einem Festnetz PSTN herstellen. Weiterhin sind diese Mobilvermittlungsstellen MSC mit jeweils zumindest einer Einrichtung RNC zur Steuerung von Basisstationen BS und zum Zuteilen von funktechnischen Ressourcen, d.h. einem Funkressourcenmanager, verbunden. Jede dieser Einrichtungen RNC ermöglicht wiederum eine Verbindung zu zumindest einer Basisstation BS. Eine solche Basisstation BS kann über eine Funkschnittstelle V1, V10 eine Verbindung zu einer oder mehreren Teilnehmerstationen, z.B. Mobilstationen MS0, MS10 oder anderweitigen mobilen und stationären Endgeräten, aufbauen. Durch jede Basisstation BS wird zumindest eine Funkzelle Z gebildet.

In FIG 2 sind beispielhaft Verbindungen V1, V10 zur Übertragung von Nutzinformationen und Signalisierungsinformationen als Punkt-zu-Punkt-Verbindungen zwischen Mobilstationen MS0, MS10 und einer Basisstation BS und ein Organisationskanal BCCH (BroadCast CHannel) als Punkt-zu-Multipunkt-Verbindung von der Basisstation BS zu den Teilnehmerstationen MS0, MS10 dargestellt. Zudem gibt es einen Zugriffskanal (RACH - Random Access CHannel), über den mobile Teilnehmerstationen eine Anforderung zur Ressourcenzuteilung übermitteln können. Alternativ zur Ressourcenanforderung sind auch kurze Bestätigungsmeldungen im Zugriffskanal übertragbar.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, insbesondere auf Teilnehmerzugangsnetze mit drahtlosem Teilnehmeranschluß und auf im unlizensierten Frequenzbereich betriebene Basisstationen und Teilnehmerstationen.

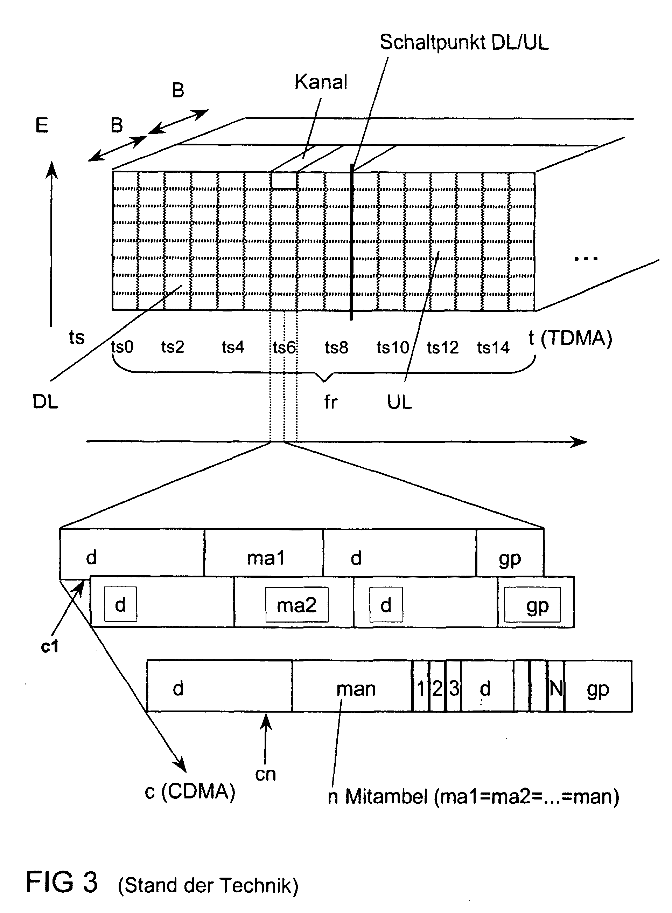

Eine beispielhafte Rahmenstruktur einer TDD-Funkübertragung (Time Division Duplex) ist aus FIG 3 ersichtlich. Innerhalb eines breitbandigen Frequenzbereichs, beispielsweise der Bandbreite B = 5 MHz, findet gemäß einer TDMA-Komponente (Time Division Multiple Access) eine Aufteilung in mehrere Zeitschlitze ts gleicher Zeitdauer, beispielsweise 16 Zeitschlitze ts0 bis ts15 pro Rahmen fr statt. Mehrere Rahmen fr bilden einen Multirahmen usw. Somit entsteht eine Kanalstruktur. Es kann dabei prinzipiell auch vorgesehen sein, dass die Zeitschlitze ts eines Rahmens fr nicht nur von einer Basisstation BS genutzt werden, sondern jeder Zeitschlitz ts eines Rahmens fr einer anderen Basisstation zugeteilt ist. Zusätzlich oder alternativ können die Zeitschlitze auf eine Vielzahl verschiedener Teilnehmerstationen verteilt werden. In jedem Fall wird ein Teil der Zeitschlitze ts jeweils in Abwärtsrichtung DL und ein Teil der Zeitschlitze in Aufwärtsrichtung UL benutzt.

Bei diesem TDD-Übertragungsverfahren entspricht das Frequenzband für die Aufwärtsrichtung UL dem Frequenzband für die Abwärtsrichtung DL. Gleiches wiederholt sich für weitere Trägerfrequenzen. Durch die variable Zuteilung der Zeitschlitze ts für Auf- oder Abwärtsrichtung UL, DL können vielfältige asymmetrische Ressourcenzuteilungen und durch die beliebige Zuteilung der Zeitschlitze ts0 - ts15 auf Teilnehmerstationen MS0, MS10 und/oder Basisstationen BS eine lastabhängige Anpassung der einer Basisstation BS zugeteilten funktechnischen Ressourcen vorgenommen werden.

Die Zuteilung der Zeitschlitze ts erfolgt in der Einrichtung RNC zur Zuteilung von funktechnischen Ressourcen, wobei im Falle benachbarter Basisstationen und einer Zeitclusterung ein Zeitschlitz ts nur einer einzigen Basisstation BS zugeteilt wird. Die der Basisstation BS zugeteilten Zeitschlitze ts werden dieser durch die Einrichtung RNC signalisiert.

Innerhalb der Zeitschlitze ts werden Informationen mehrerer Verbindungen in Funkblöcken übertragen. Die Daten sind verbindungsindividuell mit einer Feinstruktur, einem Spreizkode c, gespreizt, so dass empfangsseitig beispielsweise n Verbindungen durch diese CDMA-Komponente (CDMA: Code Division Multiple Access) separierbar sind. Die CDMA-Komponente schafft eine variable Kapazitätserweiterung der Funkschnittstelle durch Einstellung von Spreizfaktoren bzw. Vergabe einer variablen Anzahl von Spreizkodes. Es sind kurze Schutzzeiten - die Differenz der Funkblocklänge zur Länge eines Zeitschlitzes ts - vorgesehen, die als Toleranz für die Zeitsynchronisation dienen. Innerhalb der Funkblöcke werden sogenannte Mittambeln m übertragen, die in die Daten tragenden Signalanteile eingebettet sind oder allein gesendet werden.

Ist ein zu übertragender Informationsblock zu groß, um mit einem Spreizkode c und in einem Zeitschlitz ts übertragen zu werden, so werden mehrere Spreizkodes c in mehreren Zeitschlitzen ts in Form eines Kanals für kodierte zusammengesetzte Daten CCTrCH gebündelt.

Bei dem bevorzugten Ausführungsbeispiel wird der Rückkanal zur Aufrechterhaltung z. B. von Leistungsregelung bzw. Power Control, Synchronisierung der Aufwärtsverbindung oder Antennensteuerung dynamisch allokiert, wobei die u. U. sehr schnell veränderlichen Kanaleigenschaften berücksichtigt werden können. Eine hohe Dynamik kann dadurch realisiert werden, dass nicht mehr eine feste Zuordnung der UL-Ressourcen zu bestimmten Teilnehmerstationen MS0, MS10 durch die Basisstation erfolgt, sondern jede Teilnehmerstation MS0, MS10, d.h. jedes Endgerät selbständig auf bestimmte Aufwärtsverbindungs- bzw. UL-Ressourcen zugreift. Dabei kann die variable Zugriffsperiode aus Kanalmessungen gewonnen werden. Als Ressourcen können insbesondere Rahmen fr-n+0, ...fr-n+15, Codes c oder Zeitschlitze ts0 - ts15 und Mittambeln m dienen. Die Belegung der Ressource kann entsprechend z.B. durch das Senden einer bestimmten Mittambel m in einem bestimmten Rahmen fr, in einem bestimmten Zeitschlitz, mit einem bestimmten Code und/oder auch das Senden eines beliebigen für diesen Zweck durch die Basisstation BS zuordbaren Signals sein.

Durch diese Vorgehensweise ergibt sich der Vorteil, dass jeder Mobilfunkteilnehmer bzw. jede Teilnehmerstation MS0, MS10 nur gerade soviel UL-Kapazitäten belegt, wie zur Aufrechterhaltung der zugeordneten individuellen Verbindung benötigt werden. Während bei sehr stark veränderlichen Kanälen nach dem Stand der Technik ein sehr hochratiger Rückkanal allokiert werden muss, um den ungünstigsten Fall zu berücksichtigen, ist dies mit der hier beschriebenen dynamischen Allokierung nicht mehr erforderlich.

Wird der durch eine Teilnehmerstation MS0, MS10 verwendete Kanal z. B. quasi-stationär, indem das Endgerät beispielweise zum Stillstand kommt, so wird automatisch die Allokierungsrate des Rückkanals auf das Minimum reduziert, ohne dass eine zeitaufwendige Signalisierung mit der Basisstation BS erfolgen müsste. Bewegt sich das Endgerät plötzlich wieder, könnte eine nach dem Stand der Technik erforderliche Higher-Layer-Signalisierung sogar zum Verbindungsabbruch führen, falls die fix allokierte Rückkanalkapazität für sehr schlechte Kanalbedingungen nicht mehr ausreicht. Auch ein solcher Verbindungsabbruch kann durch die von der Teilnehmerstation MS0, MS10 aus veranlasste dynamische Allokierung des Rückkanals verhindert werden.

Zur Übertragung der Rückkanalinformation bieten sich insbesondere Mittambel-Ressourcen an, da diese bei Verwendung einer üblichen Codierung ein festes Chipmuster aufweisen, leicht und sicher zu detektieren sind und sowohl für die UL-Synchronisierung, Leistungsregelung (PC - Power Control) als auch zur Steuerung von adaptiven Antennen verwendet werden können. Dies bedeutet, zur Übertragung der UL-Information wird bei der hier beschriebenen Verfahrensweise kein vollständiger Burst benötigt, sondern lediglich eine isoliert gesendete Mittambel, wodurch ein zusätzlicher Vorteil dadurch entsteht, dass die erforderliche Sendeleistung der Teilnehmerstation MS0, MS10 gegenüber dem bisher üblichen Aussenden eines vollständigen Bursts verringert wird.

In besonders vorteilhafter Weise können für diesen Zweck Mittambeln in solchen Zeitschlitzen verwendet werden, die zwar vollständig mit Codes belegt sind, in denen jedoch zumindest eine Mittambel nicht belegt ist. Dieser Fall tritt z. B. immer dann ein, wenn ein Teilnehmer in einem Zeitschlitz eine UL-Übertragungsrate belegt und hierfür ein Spreizfaktor mit einer Codezahl < 16 allokiert wird.

Um die vorstehend postulierte dynamische Allokierung der UL-Ressourcen anzuwenden, ist es zweckmäßig, dass zum einen ein Mehrfachzugriff auf die vorhandenen Ressourcen vermieden wird und zum anderen die Basisstation BS die empfangenen Signale eindeutig einem Endgerät, d.h. einer der allokierten Teilnehmerstationen MS0, MS10 zuordnen kann.

Um dies zu realisieren, ist eine hierarchische Zuweisung von Mittambeln für den Rückkanal vorteilhaft, bei der jede Teilnehmerstation MS0, MS10 in Form einer Superframe-Struktur einen vorher festgelegten Anteil der Ressource erhält und die Mittambeln in einer ebenfalls vordefinierten Reihenfolge gesendet werden, wie dies am nachfolgend beschriebenen detaillierten Beispiel ersichtlich ist. Eine Superframe-Struktur besteht z.B. aus einer zyklischen Abfolge von 16 Rahmen n+0 i n+15. Die Rahmen können z.B. wiederum jeweils aus Zeitschlitzen mit Mittambeln und einer Codierung bestehen. Auch die Mittambeln können ihrerseits aus einer bestimmten Signalfolge bzw. Bitfolge bestehen, so dass verschiedene mögliche Mittambeln MA1 - MA4 verfügbar sein können. Für die Umsetzung des Konzeptes steht somit eine Vielzahl verschiedenartiger einzeln oder in Kombination verwendbarer Ressourcen zur Verfügung.

Besonders vorteilhaft ist eine Verfahrensweise, bei der die Basisstation BS aus der Frequenz der UL-Emissionen einer einzelnen Teilnehmerstation MS0, MS10 Rückschlüsse auf die gemessenen Kanaleigenschaften ziehen kann, ohne dazu explizit Signalisierungsnachrichten austauschen zu müssen.

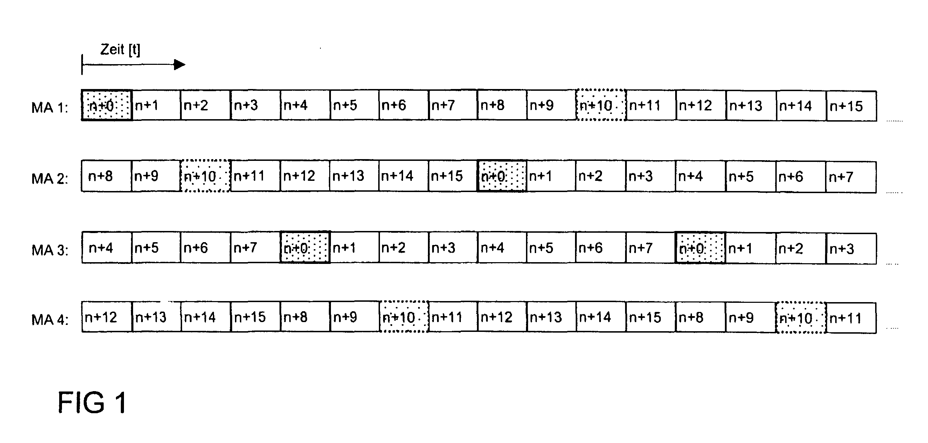

Bei dem nachfolgend anhand FIG 1 beschriebenen Ausführungsbeispiel wird eine dynamische Belegung der UL-Ressourcen statt einer statischen Belegung von UL-Ressourcen vorgenommen. Dies erfolgt unabhängig durch das Mobilfunkgerät selber abhängig von individuellen Kanalbedingungen. Dabei gibt die Basisstation lediglich bestimmte Ressourcen für mehrere Teilnehmer vor, dies aber ohne eine Signalisierung der Belegung von spezifischen Ressourcen während der aktiven Verbindung.

Anstelle einer Vorgabe einer bestimmten Ressource bzw. Ressourcenabfolge können auch andere Verfahren verwendet werden, damit die Basisstation BS erkennt, von welcher Teilnehmerstation MS0, MS10 ein Signal empfangen wurde. Neben statistischen Auswertungen können auch Faktoren, wie die Richtung, aus der ein Signal empfangen wurde, verwendet werden.

Vorteilhafterweise werden dabei als spezielle UL-Ressourcen Mittambeln, also uncodierte Pilotsequenzen für eine Kanalschätzung ohne einen eigentlichen Datenanteil für diese UL-Signalisierung verwendet. Diese Mittambeln MA1 - MA4 werden besonders bevorzugt in solchen Rahmen verwendet, in denen zwar unbelegte Mittambeln aber keine Codes mehr zur Verfügung stehen.

Bevorzugt wird also ein Zuteilungsverfahren der UL-Ressourcen, insbesondere der Mittambeln, verwendet, das sowohl eine variable Rate seitens der Teilnehmerstationen MS0, MS10 als auch eine eindeutige Identifizierung durch die Basisstation BS ermöglicht.

Je schlechter die in der Teilnehmerstation MS0, MS10 gemessene Kanalqualität ist, desto häufiger sendet diese Teilnehmerstation MS0, MS10 in der Aufwärtsverbindung. Von der Basisstation BS kann daher die Häufigkeit bzw. Frequenz der UL-Emissionen durch eine Teilnehmerstation MS0, MS10 vorteilhafterweise zur Bestimmung der in der Teilnehmerstation MS0, MS10 gemessenen Kanalqualität verwendet.

Wie aus FIG 1 ersichtlich, wird bei dem Ausführungsbeispiel von einer Mittambel MA1 ausgegangen, wobei jede von z.B. maximal 16 Stationen nur alle 16 Rahmen fr auf eine Mittambel zugreifen darf. In der FIG 1 dargestellt sind symbolisch die Rahmennummern n+0, n+1,... n+15 eines Zyklus, wobei n eine ganze Zahl ist. Wenn insgesamt 16 Teilnehmerstationen MS0, MS10 mit jeweils einem eigenen zugeordneten Code c, einer bestimmten Bit- bzw. Signalfolge der Mittambeln MA1, MA2, MA3, MA4 in dem System senden, können dabei theoretisch pro Rahmen 16 Mittambeln m für diese 16 Teilnehmerstationen zur Verfügung stehen.

Bei dem TDD-System, als einem möglichen speziellen System gibt es pro Zeitschlitz nur eine Mittambel im Grundcode, wobei 16 Teilnehmerstationen orthogonal verschiedene CDMA-Code haben, so dass letztendlich pro Teilnehmerstation maximal 16 verschiedene Mittambeln verfügbar sind. Der Grundcode ist bei TDD zyklisch verschiebbar bzw. shiftbar.

Für den Fall einer einzigen Teilnehmerstation MS0 im Bereich einer Basisstation BS im anderen Extremfall könnte diese alle 16 Codes verwenden und würde dabei aber nur eine einzige Mittambel m benötigen.

Jedoch können neben dieser einen Teilnehmerstation MS0 auch weitere Teilnehmerstationen MS10 existieren, die jedoch momentan passiv bei der Basisstation BS angemeldet sind und keine Übertragungskapazitäten für eine Datensendung benötigen. Damit diese weiteren Teilnehmerstationen MS10 mit der Basisstation BS verbunden bleiben, müssen sie sich regelmäßig bei der Basisstation BS melden. Dazu werden die freien, von der ersten Teilnehmerstation MS0 nicht benötigten Ressourcen, also hier 15 Mittambeln verwendet, so dass neben der ersten, aktiven Teilnehmerstation MS0 noch weitere 15 Teilnehmerstationen MS10 passiv aber mit einer jederzeit voll aktivierbaren Verbindung zur Basisstation BS bestehen können.

Nachfolgend werden zwei Ausführungsformen beschrieben, eine, bei der einzelne Zeitschlitze ts0 - ts15 eines Rahmens fr jeweils einer der Teilnehmerstation MS0, MS10 eineindeutig zugeordnet werden, und eine andere besonders bevorzugte und einfach umsetzbare Ausführungsform, bei der eine Rahmennummer n+0, ... n+15 einer Abfolge 16 vollständiger Rahmen fr jeweils einer der Teilnehmerstation MS0, MS10 eineindeutig zugeordnet werden.

Bei einem ersten Beispiel, das z.B. im FDD-System (FDD: Frequency Division Duplex) einsetzbar ist, wird die in FIG 1 in der ersten Zeile dargestellte Zuteilung als einfaches Zuordnungsschema für eine erste Mittambel MA1 der 16 möglichen Mittambeln verwendet. Die Berechtigung für den Zugriff der theoretisch 16 möglichen Teilnehmerstationen MS0, MS10 erfolgt dabei auf 16 aufeinanderfolgende Rahmen n+0, n+1, n+2,... n+15 eines sogenannten Super-Rahmens. Dabei darf die erste der Teilnehmerstationen MS0 auf jeweils den ersten Rahmen n+0 der 16 aufeinanderfolgenden Rahmen n+0, n+1, n+2,... n+15 zugreifen. Die weitere dargestellte, elfte der Teilnehmerstationen MS10 darf z.B. auf jeweils den elften Rahmen n+10 von 16 der aufeinanderfolgenden Rahmen n+0, n+1, n+2,... n+15 zugreifen. Über eine Abfolge von jeweils sechzehn Rahmen n+0, n+1, n+2,... n+15 bekommt somit jede der maximal 16 Teilnehmerstationen einmal die Möglichkeit, eine Mittambel m zu der Basisstation BS zu senden, um einen vollständigen Verbindungsabbau verhindern zu können. Dabei reicht insbesondere die Verwendung einer einzigen bestimmten Mittambel MA1 aus einer Vielzahl von Mittambeln MA1, MA2,... mit verschiedenem Code bzw. verschiedener Bitfolge aus.

Somit werden 16 Teilnehmer so auf die erste Mittambel MA1 verteilt, dass jeder Teilnehmer diese Mittambel in jedem x-ten der 16 Rahmen exklusiv belegen kann. Falls der Kanal so stabil ist, dass keine Übertragung benötigt wird, kann die Übertragung auch nur in jedem x-ten Rahmen jedes m-ten Super- bzw. Über-Rahmens einer Superrahmen-Struktur erfolgen, wodurch sich ein geringst möglicher Energieverbrauch in der Teilnehmerstation MS1, MS10 ergibt. Alle wieviel Rahmen zumindest eine Übertragung erforderlich ist, hängt dabei davon ab, alle wie viele Rahmen fr von der Basisstation BS eine Zusendung durch eine Teilnehmerstation MS1, MS10 erwartet wird, um nicht auf einen Ausfall dieser Teilnehmerstation MS1, MS10 zu schließen und die Verbindung zu dieser abzubauen.

Um auf einen schlechter werden Kanal reagieren zu können, wird eine zweite Mittambel MA2 verwendet, wobei vorteilhafterweise wieder eine Periode von 16 Rahmen mit den Rahmennummern n+8, n+9, n+10,..., n+15, n+1, ... n+7 für alle Teilnehmer bereitgestellt bzw. allokiert wird. Allerdings findet dabei bei der Zuordnung der Teilnehmerstationen MS1, MS10 zu den Rahmen n+8, n+9, n+10,..., n+15, n+1, ... n+7 eine Verschiebung um 8 Rahmen statt. Dadurch wird erreicht, dass zwischen zwei Aussendungen einer Teilnehmerstation MS0, MS10 nie mehr als 8 Rahmen liegen müssen, da jede Teilnehmerstation MS0, MS10 nun zu zwei Zeitpunkten bzw. in zwei Rahmen senden kann. Beispielsweise darf die erste Teilnehmerstation MS1 in dem ersten Rahmen n+0 der Mittambel MA1 und dem zeitlich neunten Rahmen n+0 der zweiten Mittambel MA2 senden. Die elfte Teilnehmerstation MS10 darf entsprechend in dem elften Rahmen n+10 der Mittambel MA1 und dem zeitlich dritten Rahmen n+10 der zweiten Mittambel MA2 senden.

Reicht diese UL-Übertragungsrate immer noch nicht aus, z.B. aufgrund sehr schlechter Werte bei der Kanalabschätzung durch eine der Teilnehmerstationen MS0, MS11, können weitere Mittambeln MA3 und MA4 belegt werden. Diesen beiden weiteren Mittambeln MA3 und MA4 werden dabei jeweils acht der sechzehn Teilnehmerstationen MS0, MS10 zugeordnet. Den ersten acht Teilnehmerstationen MS0 wird bei der ersten der beiden weiteren Mittambeln MA3 jeweils der Zugriff auf zwei zulässige Rahmennummern innerhalb der Periode von 16 Rahmen erlaubt, um wiederum äquidistante Teilperioden zu ermöglichen. Den zweiten acht Teilnehmerstationen MS10 wird bei der zweiten der beiden weiteren Mittambeln MA4 jeweils der Zugriff auf zwei zulässige Rahmennummern innerhalb der Periode von 16 Rahmen erlaubt, um wiederum äquidistante Teilperioden zu ermöglichen. Dabei wird die zeitliche Verteilung so vorgenommen, dass jede Teilnehmerstation MS0, MS10 bei der Verwendung dieser 4 Mittambeln MA1 - MA4 alle 4 Rahmen eine Möglichkeit erhält zu der Basisstation BS zu übertragen.

Bei diesem Beispiel werden somit 16 Teilnehmer (MS0 - MS15) auf insgesamt 4 zur Verfügung stehende Mittambeln MA1 bis MA4 so aufgeteilt, dass jeder Teilnehmer je nach seinen individuellen Kanalbedingungen eine variable UL-Transmissionsrate mit äquidistanten Aussendeintervallen einstellen kann.

Die vierte Mittambel MA4 kann z.B. auch nur dann eingesetzt werden, falls mehr als 8 Teilnehmerstationen MS0, MS11 eine hohe UL-Rate benötigen. Andernfalls können auch bis zu acht ausgewählte der sechzehn Teilnehmerstationen MS0, MS11 der Mittambel MA3 zugeordnet werden. Die Verwendung einer vierten Mittambel ist z.B. dann nicht erforderlich, wenn bereits beim Aufbau einer Verbindung die Schwankungsbreite der Kanaleigenschaften für jede Teilnehmerstation MS0, MS10 geschätzt werden kann und eine individuelle maximale Rate der Mittambel-Allokierung in Abhängigkeit der schlechtesten zu erwartenden Kanalbedingungen erfolgt. Deshalb sollte das Pooling der Teilnehmer auf die zur Verfügung stehenden UL-Mittambeln in sinnvoller Weise so erfolgen, dass die minimal und maximal zu erwartende Rate für die UL-Emissionen zur Aufrechterhaltung einer Verbindung berücksichtigt wird.

Bei der anderen Ausführungsform, die z.B. bei TDD einsetzbar ist, wird die in FIG 1 in der ersten Zeile dargestellte Zuteilung als einfaches Zuordnungsschema für eine erste Mittambel MA1 der z.B. 16 möglichen Mittambeln verwendet. Die Berechtigung für den Zugriff der theoretisch 16 möglichen Teilnehmerstationen MS0, MS10 erfolgt dabei auf 16 aufeinanderfolgenden Zeitschlitze ts=n+0, n+1, n+2,... n+15 eines Rahmens fr. Dabei darf die erste der Teilnehmerstationen MS0 auf jeweils den ersten Zeitschlitz ts=n+0 der 16 aufeinanderfolgenden Zeitschlitze n+0, n+1, n+2,... n+15 zugreifen. Die weitere dargestellte, elfte der Teilnehmerstationen MS10 darf z.B. auf jeweils den elften Zeitschlitz ts10 bzw. n+10 von 16 der aufeinanderfolgenden Zeitschlitzen n+0, n+1, n+2,... n+15 zugreifen. Über eine Abfolge von jeweils sechzehn Zeitschlitzen n+0, n+1, n+2,... n+15 bekommt somit jede der maximal 16 Teilnehmerstationen einmal die Möglichkeit, eine Mittambel m zu der Basisstation BS zu senden, um einen vollständigen Verbindungsabbau verhindern zu können.

Man erkennt an diesen Beispielen leicht, dass das vorgeschlagene Übertragungsschema eine sehr große Flexibilität aufweist und an verschiedenste Teilnehmerzahlen als auch Kanalbedingungen adoptiert werden kann. Während bei dem hier dargestellten Beispiel immer eine exklusive Zuordnung einer Mittambel in einem Rahmen fr bzw. n+i zu genau einem Teilnehmer bzw. einer Teilnehmerstation MS0, MS10 erfolgt, könnte hiervon in einer anderen vorteilhaften Ausgestaltung auch abgewichen werden, falls die Basisstation BS auf andere Art die eindeutige Zuordnung des Empfangssignals zu einer bestimmten der Teilnehmerstationen MS0, MS10 gewährleisten kann. Dies kann zum Beispiel durch räumliche Signatur bei Einsatz von adaptiven Antennen ermöglicht werden.

Eine Überlappung der Allokierung kann aber auch bewusst eingesetzt werden, um statistische Effekte auszunutzen, etwa, dass für zwei Teilnehmerstationen MS0, MS10 in verschiedenen Zeitschlitzen oder mit verschiedenen räumlichen Signaturen das gleichzeitige Auftreten von sehr schlechten Kanalbedingungen extrem unwahrscheinlich ist, denn beim Zulassen von Überlappungen können natürlich mit der gleichen Anzahl von zur Verfügung stehenden Mittambeln wesentlich mehr Teilnehmer unterstützt werden.

Falls die ersten zwei Mittambeln MA1, MA2 exklusiv den Teilnehmerstationen zugeordnet werden und eine dritte Mittambel MA3 immer gleichzeitig von zwei bestimmten Teilnehmerstationen belegt werden kann, ist eine eindeutige Teilnehmererkennung auch immer dann möglich, falls der eine Teilnehmer temporär einen sehr schlechten Kanal erkennt und deshalb sämtliche ihm zur Verfügung stehenden drei Mittambeln belegt, während der zweite Teilnehmer gar keine oder lediglich eine Mittambel benötigt. Dies ist so, da in diesem Fall die Nichtbelegung einer exklusiven Ressource anzeigt, dass auch die geteilte Mittambel MA3 von dieser Teilnehmerstation aktuell nicht belegt wird.

## Patentansprüche

1. Verfahren zur Aufrechterhaltung einer paketorientierten Datenverbindung zwischen einer Basisstation (BS) und zumindest einer Teilnehmerstation (MS0, MS10) eines Funk-Kommunikationssystems, bei dem
von der Basisstation (BS) zumindest eine Ressource (fr; ts0 - ts15; n+0 - n+15) der Teilnehmerstation (MS0, MS10) zugeordnet wird, die von der Teilnehmerstation (MS0, MS10) zur Aufrechterhaltung der Datenverbindung genutzt wird, **dadurch gekennzeichnet, dass** von der Teilnehmerstation (MS0; MS10) die Ressource (ts0, n+0; ts10, n+10) in Abhängigkeit von aus empfangenen Signalen der Basisstation (BS) ermittelten individuellen Kanalbedingungen belegt wird.

2. Verfahren nach Anspruch 1, bei dem
die Basisstation (BS) der Teilnehmerstation (MS0, MS10) eine oder mehrere Ressourcen (n+0 bzw. n+10; ts0 bzw. ts10) vorgibt.

3. Verfahren nach Anspruch 2, bei dem
die Vorgabe der Ressource bzw. Ressourcen (n+0 bzw. n+10; ts0 bzw. ts10) nicht fortwährend während der aktiven Verbindung erfolgt.

4. Verfahren nach einem vorstehenden Anspruch, bei dem
als Ressource ein datenfreier Ressourcenanteil, insbesondere eine oder mehrere Mittambeln (m) verwendet wird.

5. Verfahren nach einem vorstehenden Anspruch, bei dem
Zeitschlitze (ts0 - ts15) verwendet werden, in denen zumindest eine nicht belegte Mittambel (m) zur Verfügung steht.

6. Verfahren nach einem vorstehenden Anspruch, bei dem
von einer zeitlichen Abfolge von Ressourcenanteilen (n+0 - n+10; ts0 bzw. ts10) jeder der mit der Basisstation (BS) in Verbindung stehender Teilnehmerstationen (MS0, MS10) jeweils zumindest ein Ressourcenanteil (MA1, n+0 bzw. MA1, n+10) zugeordnet wird.

7. Verfahren nach Anspruch 6, bei dem
einer oder einer Teilmenge der Teilnehmerstationen (MS0, MS10) jeweils zumindest ein oder zwei andere Ressourcenanteile (MA3, n+0 bzw. MA4, n+10) zugeordnet werden,
wobei diese anderen Ressourcenanteile (MA3, n+0 bzw. MA4, n+10) eine andere Mittambel (MA3 bzw. MA4) und/oder eine andere Codierung aufweisen, als der zumindest eine Ressourcenanteil (MA1, n+0 bzw. MA1, n+10).

8. Verfahren nach Anspruch 6 oder 7, bei dem
zumindest einer der Teilnehmerstationen (MS0, MS10) zumindest ein weiterer Ressourcenanteil (MA2, n+0 bzw. MA2, n+10) in der zeitlichen Abfolge zugeordnet wird, der zeitlich gegenüber dem bzw. den anderen zugeordneten Ressourcenanteilen (MA1, n+0 bzw. MA1, n+10) versetzt ist.

9. Verfahren nach Anspruch 8, bei dem
der eine Ressourcenanteil (MA1, n+0 bzw. MA1, n+10) aus einer anderen Mittambel (MA1) besteht und/oder eine andere Codierung als der zumindest eine weitere Ressourcenanteil (MA2, n+0 bzw. MA2, n+10) aufweist.

10. Verfahren nach einem vorstehenden Anspruch, bei dem
die Teilnehmerstation (MS0, MS10) zur Aufrechterhaltung einer passiv bereit stehenden Datenverbindung zumindest in zeitlichen Abständen auf die zugewiesene Ressource (fr; ts0 - ts15; n+0 - n+15) zugreift und Informationen oder Signale zur Basisstation (BS) sendet.

11. Funk-Kommunikationssystem, mit
- einer Basisstation (BS), und
- zumindest einer Teilnehmerstation (MS0, MS10), die mit der Basisstation (BS) über eine Funkschnittstelle (V0, V10) kommuniziert, wobei
- die Basisstation (BS) zum Verwalten von Ressourcen und zum Zuweisen von zumindest einer der Ressourcen zu der Teilnehmerstation (MS0, MS10) ausgebildet ist,
**dadurch gekennzeichnet, dass**
- die Teilnehmerstation (MS0, MS10) zur Aufrechterhaltung einer paketorientierten Datenverbindung mit der Basisstation (BS) zum Belegen der zugewiesenen Ressource (ts0, n+0; ts10, n+10) in Abhängigkeit von aus empfangenen Signalen der Basisstation (BS) ermittelten individuellen Kanalbedingungen und zum Senden über die zugewiesene Ressource (fr; ts0 - ts15; n+0 - n+15) zur Basisstation (BS) ausgebildet ist.

## Claims

1. Method for maintaining a packet-oriented data connection between a base station (BS) and at least one subscriber station (MS0, MS10) of a radio communications system, in which the base station (BS) allocates at least one resource (fr; ts0 - ts15; n+0 - n+15) to the subscriber station (MS0, MS10) which is used by said subscriber station (MS0, MS10) for maintaining the data connection,
**characterized in that**,
the resource (ts0, n+0; ts10, n+10) is occupied by the subscriber station (MS0; MS10) depending on the individual channel conditions determined from the received base station (BS) signals.

2. Method according to claim 1, in which
the base station (BS) assigns one or more resources (n+0 or n+10; ts0 or ts10) to the subscriber station (MS0, MS10).

3. Method according to claim 2, in which
the assigning of the resource or the resources (n+0 or n+10; ts0 or ts10) does not take place continually during the active connection.

4. Method according to a preceding claim, in which
a data-free resource part, particularly one midamble or a number of midambles (m) is used as the resource part.

5. Method according to a preceding claim, with time slots (ts0 - ts15) in which at least an unoccupied midamble (m) is made available being used.

6. Method according to a preceding claim, in which
at least one resource part (MA1, n+0 or MA1, n+10) out of a chronological sequence of the resource parts (n+0 - n+10; ts0 or ts10) is allocated in each case to each one of the subscriber stations (MS0, MS10) made available to the base station (BS).

7. Method according to claim 6, in which
at least one or two other resource parts (MA3, n+0 or MA4, n+10) are allocated in each case to one subscriber station or to a subset of the subscriber stations (MS0, MS10) in which case these other resource parts (MA3, n+0 or MA4, n+10) consist of another midamble (MA3 or MA4) and/or a coding other than that of at least the one resource part (MA1, n+0 or MA1, n+10).

8. Method according to claim 6 or 7, in which
at least one additional resource part (MA2, n+0 or MA2, n+10) in a chronological sequence is allocated to one of the subscriber stations (MS0, MS10); said resource part shifted in time compared with the allocated resource part or parts (MA1, n+0 or MA1, n+10).

9. Method according to claim 8, in which
the one resource part (MA1, n+0 or MA1, n+10) consists of another midamble (MA1) and/or a coding other than that of at least the one other resource part (MA2, n+0 or MA2, n+10).

10. Method according to a preceding claim, in which
the subscriber station (MS0, MS10) for maintaining a passively available data connection at least accesses the assigned resource (fr; ts0 - ts15; n+0 - n+15) at intervals in time and sends information or signals to the base station (BS).

11. Radio communications system with
- a base station (BS), and
- at least one subscriber station (MS0, MS10) which communicates with the base station (BS) via a radio interface (V0, V10), in which case
- the base station (BS) for managing resources and for assigning at least one of the resources to the subscriber station (MS0, MS10) is embodied,
**characterized in that**
- the subscriber station (MS0, MS10) is embodied for maintaining a packet-oriented data connection to the base station (BS) for occupying the assigned resource (ts0, n+0; ts10, n+10) depending on the individual channel conditions determined from the received base station (BS) signals and for sending via the assigned resource (fr; ts0 - ts15; n+0 - n+15) to the base station (BS).

## Revendications

1. Procédé pour maintenir une connexion de données orientée paquet entre une station de base (BS) et au moins une station d'abonné (MS0, MS10) d'un système de radiocommunication, dans lequel
au moins une ressource (fr ; ts0 - ts15 ; n+0 - n+15) est affectée à la station d'abonné (MS0, MS10) par la station de base (BS), cette ressource étant utilisée par la station d'abonné (MS0, MS10) pour maintenir la connexion de données,
**caractérisé en ce que**
la ressource (ts0, n+0 ; ts10, n+10) est occupée par la station d'abonné (MSO ; MS10) en fonction de conditions de canal individuelles, déterminées à partir de signaux reçus de la station de base (BS).

2. Procédé selon la revendication 1, dans lequel
la station de base (BS) spécifie une ou plusieurs ressources (n+0 resp. n+10 ; ts0 resp. ts10) à la station d'abonné (MS0, MS10).

3. Procédé selon la revendication 2, dans lequel
la spécification de la ressource resp. des ressources (n+0 resp. n+10 ; ts0 resp. ts10) n'est pas réalisée de manière continue pendant la connexion active.

4. Procédé selon l'une quelconque des revendications précédentes, dans lequel
une fraction de ressource exempte de données, notamment un ou plusieurs midamble(s) (m), est utilisée comme ressource.

5. Procédé selon l'une quelconque des revendications précédentes, dans lequel
des créneaux temporels (ts0 - ts15) sont utilisés, dans lesquels au moins un midamble (m) non occupé est disponible.

6. Procédé selon l'une quelconque des revendications précédentes, dans lequel
au moins une fraction de ressource (MA1, n+0 resp. MA1, n+10) est respectivement affectée à chacune des stations d'abonné (MS0, MS10) en liaison avec la station de base (BS) par une suite temporelle de fractions de ressources (n+0 - n+10 ; ts0 resp. ts10).

7. Procédé selon la revendication 6, dans lequel
au moins une ou deux autres fractions de ressources (MA3, n+0 resp. MA4, n+10) sont respectivement affectées à une station d'abonné ou à une partie des stations d'abonné (MS0, MS10), ces autres fractions de ressources (MA3, n+0 resp. MA4, n+10) présentant un autre midamble (MA3 resp. MA4) et/ou un autre codage que l'au moins une fraction de ressource (MA1, n+0 resp. MA1, n+10).

8. Procédé selon la revendication 6 ou 7, dans lequel
au moins une autre fraction de ressource (MA2, n+0 resp. MA2, n+10) est affectée à au moins une des stations d'abonné (MS0, MS10) dans la suite temporelle, cette autre fraction de ressource étant décalée dans le temps par rapport à la resp. aux autres fractions de ressources affectées (MA1, n+0 resp. MA1, n+10).

9. Procédé selon la revendication 8, dans lequel
l'une fraction de ressource (MA1, n+0 resp. MA1, n+10) est constituée d'un autre midamble (MA1) et/ou présente un autre codage que l'au moins une autre fraction de ressource (MA2, n+0 resp. MA2, n+10).

10. Procédé selon l'une quelconque des revendications précédentes, dans lequel
la station d'abonné (MS0, MS10), pour maintenir une connexion de données disponible de manière passive, a recours à la ressource affectée (fr ; ts0 - ts15 ; n+0 - n+15), au moins par intervalles de temps, et émet des informations ou signaux à la station de base (BS).

11. Système de radiocommunication, comprenant
- une station de base (BS), et
- au moins une station d'abonné (MS0, MS10) qui communique avec la station de base (BS) par l'intermédiaire d'une interface radio (V0, V10),
- la station de base (BS) étant exécutée pour gérer des ressources et pour affecter au moins une des ressources à la station d'abonné (MS0, MS10),
**caractérisé en ce que**
- la station d'abonné (MS0, MS10) est exécutée pour maintenir une connexion de données orientée paquet avec la station de base (BS), pour occuper la ressource affectée (ts0, n+0 ; ts10, n+10) en fonction de conditions de canal individuelles déterminées à partir de signaux reçus de la station de base (BS) et pour émettre à la station de base (BS) par l'intermédiaire de la ressource affectée (fr ; ts0 -ts15 ; n+0 - n+15).
